# EUROPEAN PATENT SPECIFICATION

(11) **EP 2 440 358 B1**
(45) Date of publication and mention of the grant of the patent: **16.04.2014**
(21) Application number: 10740257.0
(22) Date of filing: 09.06.2010
(51) Int. Cl.: B23F 17/00, B23Q 1/28

(54) **MACHINE FOR MAKING GEARS**
MASCHINE ZUR ZAHNRADFERTIGUNG
MACHINE POUR LA PRODUCTION DE ROUES DENTEES

(30) Priority: 09.06.2009 IT BO20090373
(43) Date of publication of application: 18.04.2012
(73) Proprietor: Samp S.p.a. Con Unico Socio, Bentivoglio (IT)
(72) Inventor: AFFATICATI, Artemio, I-21052 Busto Arsizio (IT); FRANCESCHET, Marco, I-30035 Mirano (IT); MANARA, Mauro, I-44011 Argenta (IT); PERRONE, Vito, I-26013 Crema (IT)
(74) Representative: Bergadano, Mirko
(86) International application number: PCT/IB2010/001381
(87) International publication number: WO 2010/143047

(56) References cited:
- DE-B3-102007 005 252
- DE-C- 964 197

## Description

### TECHNICAL FIELD

The present invention relates to a machine for making gears.

### BACKGROUND ART

In the gear manufacturing field, a known method of making gears consists of machining a set of teeth on a corresponding piece and subsequently grinding the toothed piece. Each gear cutting and grinding process comprises a respective rough-machining phase and a respective finishing phase of the piece.

Generally, the gear cutting process is performed by a gear cutting machine that comprises a faceplate mounted so as to rotate about its own longitudinal axis and a machining head, which is provided with at least one tool for machining the piece, and is movable along a guiding device extending in a direction substantially transversal to the longitudinal axis of the faceplate.

Since the high level of stress transmitted to the operating head and, thus, to said guiding mechanism during the gear cutting process may affect the correct orientation and correct shape of said guiding mechanism, the prior art gear cutting machines of the type described above, although extremely well tried and tested, are unable to perform the subsequent grinding phase which, unlike the initial gear cutting process, requires high precision and tolerances.

Consequently, once the gear cutting process is complete, the piece must be transferred to a grinder that is structurally similar to the gear cutting machine, which therefore makes the gear production process relatively complex and expensive.

### DISCLOSURE OF INVENTION

It is an object of the present invention to provide a machine for making gears that has none of the disadvantages described above and is simple and economic to manufacture.

According to the present invention, there is provided a machine for making gears, as disclosed in the attached claims.

DE-B3-10 2007 005 252 (NILES WERKZEUGMASCHINEN GMBH), which illustrates the preamble portion of present Claim 1, refers to a machine for making gears. Such a machine comprises a faceplate, which is mounted so as to rotate about a given longitudinal first axis thereof and supports, in use, a piece being machined; and an operating head, which is provided with a tool for the machining of the piece, and is movable in a first direction substantially transversal to said first axis. The faceplate is movable in the first direction (i.e. the longitudinal axis of the machine); and, furthermore, a first and a second locking device are adapted to selectively lock the operating head and the faceplate in the first direction, respectively.

### BRIEF DESCRIPTION OF THE DRAWINGS

The present invention will now be described with reference to the attached drawings which illustrate a non-limiting embodiment thereof, in which:
Figure 1 is a schematic perspective view of a preferred embodiment of the machine according to the present invention;
Figure 2 is a plan view of the machine in Figure 1;
Figure 3 is a schematic side view, with sections of parts, parts removed, and parts enlarged for the sake of clarity, of a first detail of the machine in Figures 1 and 2;
Figure 4 is a schematic side view, with sections of parts and parts removed for the sake of clarity, of a second detail of the machine of Figures 1 and 2; and
Figure 5 is a schematic side view, with sections of parts and parts removed for the sake of clarity, of a detail of Figure 4.

### BEST MODE FOR CARRYING OUT THE INVENTION

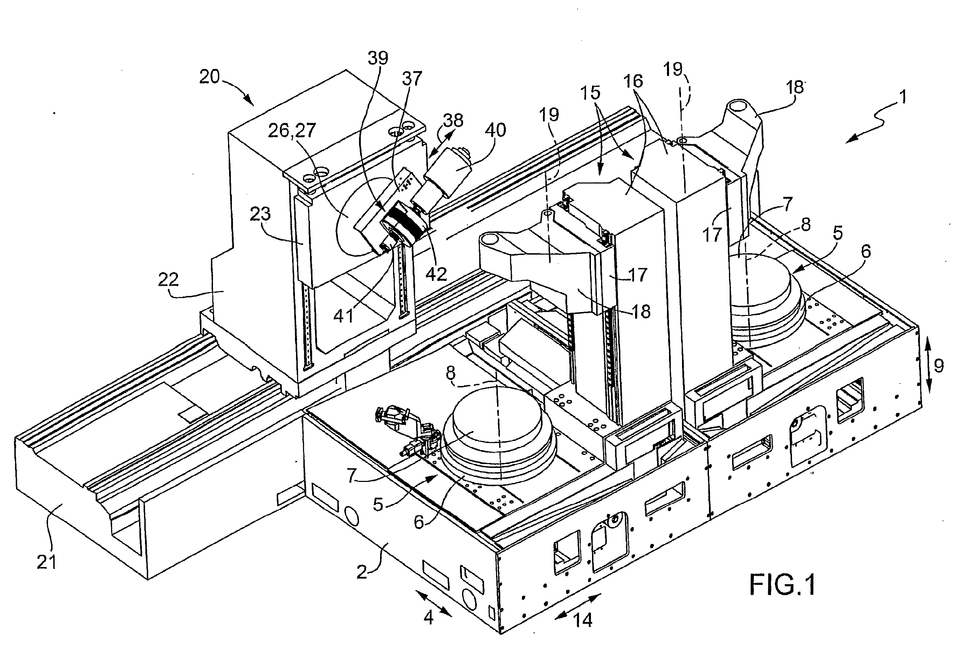

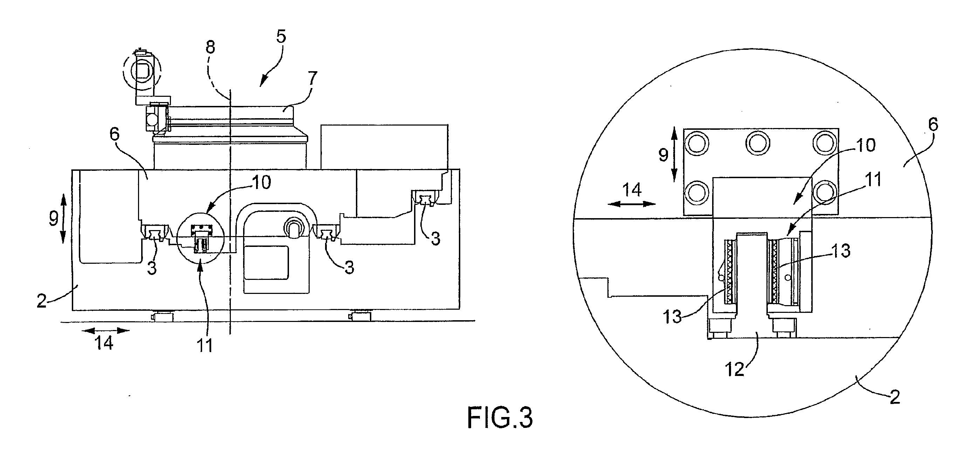

With reference to Figures 1 and 3, number 1 indicates, as a whole, a machine for making gears (not shown) comprising a support frame 2, which is substantially rectangular in shape, and supports two guiding devices 3 that are parallel to each other and to a substantially horizontal direction 4.

Each device 3 is slidingly engaged by a relative clamping unit 5 comprising a slide 6, which is slidingly coupled to the device 3 so as to move, with respect to the frame 2 and under the thrust of a known and not shown actuating device, in a straight line in the direction 4, and supports a faceplate 7, which is suitable to support a substantially cylindrical workpiece (not shown) and is mounted on the slide 6 so as to rotate, with respect to the slide 6 and under the thrust of a known and not shown actuating device, about its own longitudinal axis 8 parallel to a substantially vertical direction 9 and transversal to the direction 4.

According to Figure 3, each slide 6 is suitable to be locked along the relative device 3 by a locking device 10 comprising a brake 11, which in turn comprises a crosspiece 12 mounted on the frame 2 parallel to the direction 4 and two braking shoes 13 which are housed inside the slide 6, extend in the direction 4, are arranged on opposite sides of the crosspiece 12 in a horizontal direction 14 orthogonal to the directions 4 and 9, and are movable, driven by a hydraulic actuator (not shown) obtained at least in part through the slide 6, between a clamping position and a released position of said crosspiece 12.

With reference to Figure 1, each unit 5 cooperates with an operating unit 15 comprising a vertical column 16, which extends upwards from the frame 2 in the direction 9, is arranged between the two units 5 facing the column 16 of the other unit 15, and supports a slide 17 slidingly coupled to the column 16 so as to move in a straight line in the direction 9 along the column 16 under the thrust of a known and not shown actuating device.

The unit 15 also comprises a support arm 18, which is hinged to the slide 17 to rotate, with respect to the slide 17 and under the thrust of a known and not shown actuating device, about a fulcrum axis 19 parallel to the direction 9, and supports an auxiliary device (not shown) for machining and/or controlling the piece (not shown) mounted on the relative faceplate 7.

The machine 1 is also provided with an additional operating unit 20 comprising an elongated base 21, which extends in the direction 14, is arranged alongside the frame 2, and one end of which protrudes from said frame 2; a horizontal slide 22, which extends upwards from the base 21 in the direction 9, and is slidingly coupled to the base 21 so as to move in a straight line along the base 21 in the direction 14 under the thrust of a known and not shown actuating device; and a vertical slide 23 slidingly coupled to the slide 22 so as to move in a straight line along the slide 22 in the direction 9 under the thrust of a known and not shown actuating device.

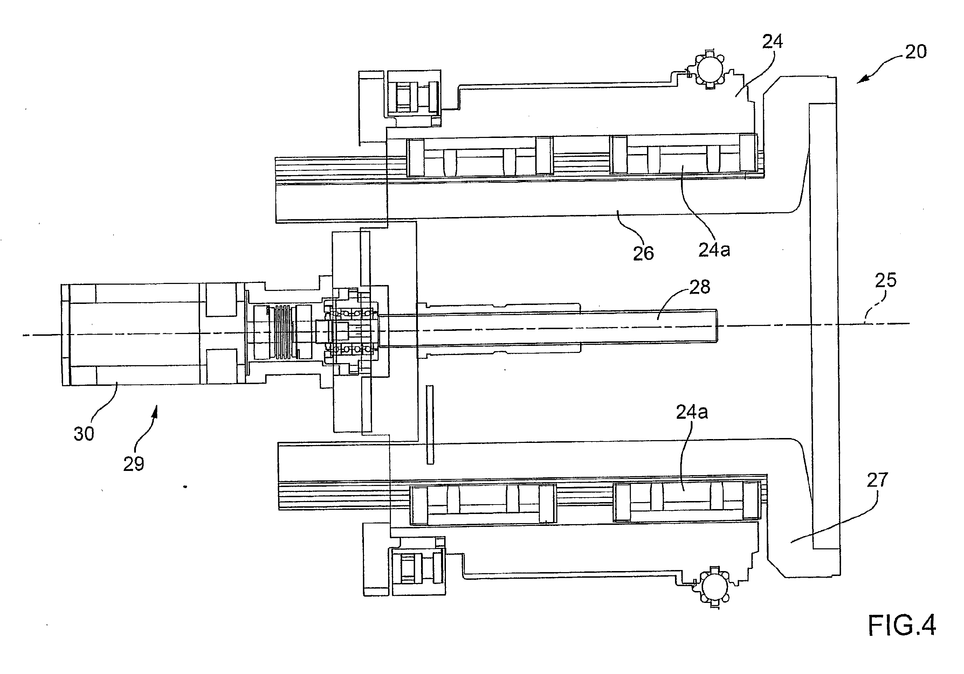

According to Figure 4, the slide 23 is rotatingly engaged by a tube 24, which has a longitudinal axis 25 parallel to the direction 4, extends through the slide 23, and is mounted to rotate with respect to the slide 23 about said axis 25 under the thrust of a known and not shown actuating device.

The tube 24 supports a tubular slide 26, which extends inside the tube 24, coaxially with respect to the axis 25, is axially limited by an annular flange 27 that extends outside and facing the tube 24, is slidingly coupled to a pair of guideways 24a mounted on the inner surface of the tube 24, parallel to the direction 4, and is also coupled, by means of a lead screw system, to a screw 28 of an actuating device 29, one motor 30 of which fixed to the tube 24 makes the screw 28 rotate to make the slide 26 move in a straight line along said tube 24 in the direction 4.

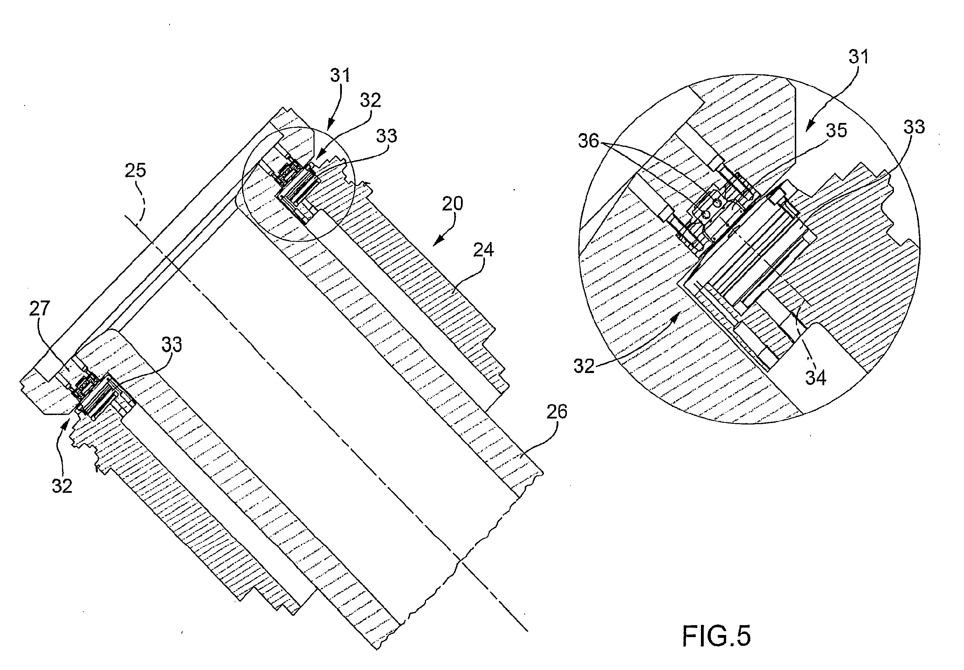

With reference to Figure 5, the slide 26 is suitable to be locked against the tube 24 in the direction 4 by means of a locking assembly 31 comprising a plurality of locking devices 32 (in this case four locking devices 32) uniformly distributed about the axis 25.

Each device 32 includes an actuating cylinder 33, which is housed inside the tube 24, has a longitudinal axis 34 parallel to the direction 4, and is provided with an output shaft 35 which extends in the direction 4, protrudes axially outside the tube 24, and is provided with a plurality of hooking members 36 uniformly distributed about said axis 34.

Each member 36 is housed inside a relative radial seat (not shown) made through the rod 35 and shaped in such a way as to allow the member 36 to move crosswise with respect to the axis 34 between a clamping position and a released position of the slide 26.

When the slide 26 is arranged in a retracted position with the flange 27 substantially in contact with the tube 24 (Figure 5), the rods 35 of the cylinders 33 extend within the flange 27, the members 36 are moved to their clamping positions and the rods 35 are moved to relative retracted positions to lock the slide 26 against the tube 24.

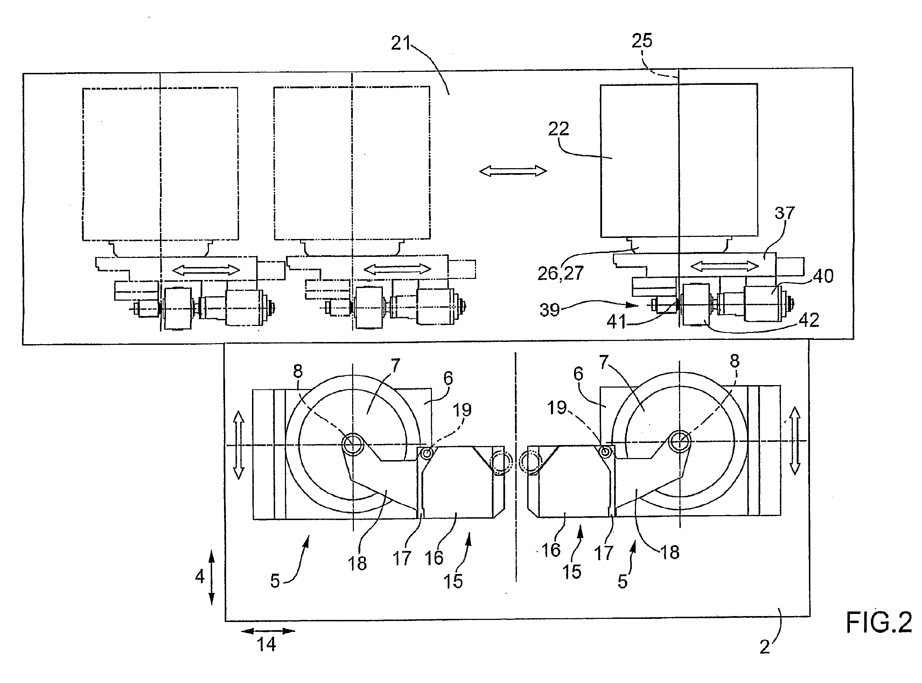

With reference to Figure 2, the unit 20 also comprises a slide 37 slidingly coupled to the flange 27, so as to move, in relation to the slide 26 and under the thrust of a known and not shown actuating device, in a straight line in a direction 38, the orientation of which depends on the angular position of the tube 24 about the axis 25.

The slide 37 supports an operating head 39 comprising an electric motor 40, which extends in the direction 38, and has an output shaft 41 to which at least one tool 42 is keyed for machining said pieces (not shown).

During use, the operating head 39 is moved along the base 21 in the direction 14 between two machining stations, inside each of which the head 39 faces a clamping unit 5 to machine the piece (not shown) mounted on the relative faceplate 7, and a tool changing station, in which the head 39 fits into the portion of the base 21 that protrudes from the frame 2 in the direction 14 to replace the tool 42.

The machine 1 is capable of performing two types of machining processes on each piece (not shown):
gear cutting, to produce the teeth of the gears (not shown), which normally comprises a first rough-machining stage and a second finishing phase, and
a grinding process to grind the teeth made during the previous gear cutting process and which normally also comprises a first rough-grinding stage and a second finishing phase.

In this respect it should be noted that the locking assembly 31 of the slide 26 and the locking device 10 for each slide 6 are connected to an electronic control unit (not shown) capable of selectively moving the locking assembly 31 into its locking position and the locking device 10 into its released position when machining the teeth on the relative piece (not shown) and capable of selectively moving the locking assembly 31 in its released position and the locking device 10 in its locked position while said piece (not shown) is being ground. In other words, gear cutting is performed by moving only the faceplate 7 in the direction 4 and locking the operating head 39 in said direction 4, while the grinding process is performed by moving only the operating head 39 in the direction 4 and locking the faceplate 7 in said direction 4.

Locking the slide 26 in the direction 4 prevents the high levels of stress transmitted to the operating head 39 during gear machining to jeopardize the proper orientation and correct shape of the guideways 24a of the tube 24 and thus allows the machine 1 to perform both the gear cutting process and the grinding process properly on each piece (not shown) using a single operating head 39.

## Claims

1. A machine for making gears, the machine comprising at least one faceplate (7), which is mounted so as to rotate about a given longitudinal first axis (8) thereof, and supports a piece being machined; and at least one operating head (39), which is provided with at least one tool (42) for the machining of the piece, and is movable in a first direction (4) substantially transversal to said first axis (8); and
wherein the faceplate (7) is movable in said first direction (4); a first and a second locking device (31, 10) being suitable to selectively lock the operating head (39) and the faceplate (7) in the first direction (4), respectively;
the machine **being characterized in that** it further comprises an electronic control unit for moving said first locking device (31) in a locked position and said second locking device (10) in an unlocked position when a first tool (42)_for the toothing of the piece is mounted on the operating head (39), and for moving said first locking device (31) in an unlocked position and said second locking device (10) in a locked position when a second tool (42) for the grinding of the piece is mounted on the operating head (39).

2. The machine, according to Claim 1, further comprising a first guiding device (24), which extends in said first direction (4), and is slidingly engaged by the operating head (39); said first locking device (31) comprising first locking means (32) movable between a locked position of the operating head (39) along the first guiding device (24) and an unlocked position.

3. The machine, according to Claim 2, wherein said first locking means (32) comprise at least one tie rod (35), which extends in the first direction (4), and is carried by the first guiding device (24) for locking the operating head (39) on the first guiding device (24).

4. The machine according to Claim 3, wherein the tie rod (35) has a second longitudinal axis (34) parallel to the first direction (4), and is provided with a plurality of hooking members (36), which are distributed about said second axis (34), and are movable between an extracted locking position of the operating head (39) and a retracted released position of the operating head (39).

5. The machine, according to Claim 3 or 4, wherein the tie rod (35) is movable in said first direction (4).

6. The machine, according to claim 2, further comprising a second guiding device (3, 12), which extends in said first direction (4), and is slidingly engaged by the faceplate (7); said second locking device (10) comprising second locking means (11) movable between a locked position of the faceplate (7) along the second guiding device (3, 12) and an unlocked position.

7. The machine, according to Claim 6, wherein said second locking means (11) comprise a brake (11) carried by the faceplate (7) for locking the faceplate (7) along the second guiding device (3, 12).

8. The machine, according to Claim 7, wherein the brake (11) comprises at least one braking shoe (13) movable between a clamping position and a released position of the second guiding device (3, 12).

9. The machine, according to any of the preceding Claims, further comprising an operating unit (20) comprising, in turn, an elongated base (21) extending in a second direction (14) substantially transversal to the first direction (4), a first slide (22) mounted on the base (21) to move in the second direction (14), a second slide (23) mounted on the first slide (22) to move in a third direction (9) substantially orthogonal to said first and second direction (4, 14), a first guiding device (24) mounted rotatably on the second slide (23) for rotating about a third longitudinal axis (25) thereof parallel to said first direction (4), and a third slide (26) mounted on the first guiding device (24) to move in the first direction (4); the operating head (39) being carried by said third slide (26).

## Patentansprüche

1. Maschine zur Zahnradherstellung, wobei die Maschine zumindest eine Stirnplatte (7) aufweist, die so montiert ist, dass sie sich um eine gegebene erste Längsachse (8) davon dreht, und die ein Werkstück trägt, welches bearbeitet wird; und mindestens einen Bearbeitungskopf (39), der mit mindestens einem Werkzeug (42) zur Bearbeitung des Werkstücks versehen ist, und welcher in einer ersten Richtung (4) im Wesentlichen quer zur ersten Achse (8) bewegbar ist; und
wobei die Stirnplatte (7) in der ersten Richtung (4) bewegbar ist; wobei erste und zweite Verriegelungsvorrichtungen (31, 10) geeignet sind, um selektiv den Bearbeitungskopf (39) und die Stirnplatte (7) jeweils in der ersten Richtung (4) zu verriegeln;
wobei die Maschine **dadurch gekennzeichnet ist, dass** sie weiter eine elektronische Steuereinheit zum Bewegen der ersten Verriegelungsvorrichtung (31) in eine verriegelte Position und der zweiten Verriegelungsvorrichtung (10) in eine nicht verriegelte Position aufweist, wenn ein erstes Werkzeug (42) für die Zahnbearbeitung des Werkstückes an dem Bearbeitungskopf (39) montiert ist, und zum Bewegen der ersten Verriegelungsvorrichtung (31) in eine nicht verriegelte Position und der zweiten Verriegelungsvorrichtung (10) in eine verriegelte Position, wenn ein zweites Werkzeug (42) zum Schleifen des Werkstückes an den Bearbeitungskopf (39) montiert ist.

2. Maschine nach Anspruch 1, die weiter eine erste Führungsvorrichtung (24) aufweist, die sich in der ersten Richtung (4) erstreckt und die gleitend mit dem Bearbeitungskopf (39) in Eingriff ist; wobei die erste Verriegelungsvorrichtung (31) erste Verriegelungsmittel (32) aufweist, die zwischen einer verriegelten Position des Bearbeitungskopfes (39) entlang der ersten Führungsvorrichtung (24) und einer nicht verriegelten Position bewegbar sind.

3. Maschine nach Anspruch 2, wobei die ersten Verriegelungsmittel (32) mindestens eine Verbindungsstange (35) aufweisen, welche sich in der ersten Richtung (4) erstreckt und durch die erste Führungsvorrichtung (24) getragen wird, um den Bearbeitungskopf (39) an der ersten Führungsvorrichtung (24) zu verriegeln.

4. Maschine nach Anspruch 3, wobei die Verbindungsstange (35) eine zweite Längsachse (34) parallel zur ersten Richtung (4) hat und mit einer Vielzahl von Hakengliedern (36) versehen ist, die um die zweite Achse (34) verteilt sind, und die zwischen einer herausgezogenen Verriegelungsposition des Bearbeitungskopfes (39) und einer zurückgezogenen Freigabeposition des Bearbeitungskopfes (39) bewegbar sind.

5. Maschine nach Anspruch 3 oder 4, wobei die Verbindungsstange (35) in der ersten Richtung (4) bewegbar ist.

6. Maschine nach Anspruch 2, die weiter eine zweite Führungsvorrichtung (3, 12) aufweist, die sich in der ersten Richtung (4) erstreckt, und die gleitend mit der Stirnplatte (7) in Eingriff ist, wobei die zweite Verriegelungsvorrichtung (10) zweite Verriegelungsmittel (11) aufweist, die zwischen einer verriegelten Position der Stirnplatte (7) entlang der zweiten Führungsvorrichtung (3, 12) und einer nicht verriegelten Position bewegbar sind.

7. Maschine nach Anspruch 6, wobei die zweiten Verriegelungsmittel (11) eine Bremse (11) aufweisen, die von der Stirnplatte (7) getragen wird, um die Stirnplatte (7) entlang der zweiten Führungsvorrichtung (3, 12) zu verriegeln.

8. Maschine nach Anspruch 7, wobei die Bremse (11) zumindest einen Bremsschuh (13) aufweist, der zwischen einer Klemmposition und einer Freigabeposition der zweiten Führungsvorrichtung (3, 12) bewegbar ist.

9. Maschine nach einem der vorhergehenden Ansprüche, die weiter eine Bearbeitungseinheit (20) aufweist, welche wiederum eine langgestreckte Basis (21) aufweist, die sich in einer zweiten Richtung (14) im Wesentlichen quer zur ersten Richtung (4) erstreckt, einen ersten Schlitten (22), der auf der Basis (21) montiert ist, um sich in der zweiten Richtung (14) zu bewegen, einen zweiten Schlitten (23), der am ersten Schlitten (22) montiert ist, um sich in einer dritten Richtung (9) im Wesentlichen senkrecht zu den ersten und zweiten Richtungen (4, 14) zu bewegen, eine ersten Führungsvorrichtung (24), die drehbar an dem zweiten Schlitten (23) montiert ist, um sich um eine dritte Längsachse (25) davon parallel zur ersten Richtung (4) zu drehen, und einen dritten Schlitten (26), der an der ersten Führungsvorrichtung (24) montiert ist, um sich in der ersten Richtung (4) zu bewegen: wobei der Bearbeitungskopf (39) von dem dritten Schlitten (26) getragen wird.

## Revendications

1. Machine pour fabriquer des engrenages, la machine comprenant au moins une plaque (7) qui est montée afin de tourner autour de son premier axe longitudinal (8) donné, et supporte une pièce qui est usinée ; et au moins une tête de commande (39) qui est prévue avec au moins un outil (42) pour l'usinage de la pièce, et est mobile dans une première direction (4) sensiblement transversale par rapport audit premier axe (8) ; et
dans laquelle la plaque (7) est mobile dans ladite première direction (4) ; un premier et un second dispositif de verrouillage (31, 10) qui sont appropriés pour bloquer sélectivement la tête de commande (39) et la plaque (7) dans la première direction (4), respectivement ;
la machine étant **caractérisée en ce qu'**elle comprend en outre une unité de commande électronique pour déplacer ledit premier dispositif de verrouillage (31) dans une position verrouillée et ledit second dispositif de verrouillage (10) dans une position déverrouillée lorsqu'un premier outil (42) pour la dentelure de la pièce est monté sur la tête de commande (39), et pour déplacer ledit premier dispositif de verrouillage (31) dans une position déverrouillée et ledit second dispositif de verrouillage (10) dans une position verrouillée lorsqu'un second outil (42) pour le meulage de la pièce est monté sur la tête de commande (39).

2. Machine selon la revendication 1, comprenant en outre un premier dispositif de guidage (24) qui s'étend dans ladite première direction (4) et est mis en prise de manière coulissante par la tête de commande (39) ; ledit premier dispositif de verrouillage (31) comprenant des premiers moyens de verrouillage (32) mobiles entre une position verrouillée de la tête de commande (39) le long du premier dispositif de guidage (24) et une position déverrouillée.

3. Machine selon la revendication 2, dans laquelle lesdits premiers moyens de verrouillage (32) comprennent au moins une tige d'assemblage (35) qui s'étend dans la première direction (4) et est portée par le premier dispositif de guidage (24) pour verrouiller la tête de commande (39) sur le premier dispositif de guidage (24).

4. Machine selon la revendication 3, dans laquelle la tige d'assemblage (35) a un deuxième axe longitudinal (34) parallèle à la première direction (4) et est prévue avec une pluralité d'éléments d'accrochage (36) qui sont répartis autour dudit deuxième axe (34) et sont mobiles entre une position de verrouillage extraite de la tête de commande (39) et une position libérée rétractée de la tête de commande (39).

5. Machine selon la revendication 3 ou 4, dans laquelle la tige d'assemblage (35) est mobile dans ladite première direction (4).

6. Machine selon la revendication 2, comprenant en outre un second dispositif de guidage (3, 12) qui s'étend dans ladite première direction (4) et est mis en prise de manière coulissante par la plaque (7) ; ledit second dispositif de verrouillage (10) comprenant des seconds moyens de verrouillage (11) mobiles entre une position verrouillée de la plaque (7) le long du second dispositif de guidage (3, 12) et une position déverrouillée.

7. Machine selon la revendication 6, dans laquelle lesdits seconds moyens de verrouillage (11) comprennent un frein (11) porté par la plaque (7) pour verrouiller la plaque (7) le long du second dispositif de guidage (3, 12).

8. Machine selon la revendication 7, dans laquelle le frein (11) comprend au moins un segment de frein (13) mobile entre une position de serrage et une position débloquée du second dispositif de guidage (3, 12).

9. Machine selon l'une quelconque des revendications précédentes, comprenant en outre une unité de commande (20) comprenant à son tour, une base allongée (21) s'étendant dans une deuxième direction (14) sensiblement transversale à la première direction (4), une première glissière (22) montée sur la base (21) pour se déplacer dans la deuxième direction (14), une deuxième glissière (23) montée sur la première glissière (22) pour se déplacer dans une troisième direction (9) sensiblement orthogonale auxdites première et deuxième directions (4, 14), un premier dispositif de guidage (24) monté en rotation sur la deuxième glissière (23) pour tourner autour de son troisième axe longitudinal (25) parallèle à ladite première direction (4), et une troisième glissière (26) montée sur le premier dispositif de guidage (24) pour se déplacer dans la première direction (4) ; la tête de commande (39) étant portée par ladite troisième glissière (26).
